# EUROPÄISCHE PATENTSCHRIFT

(11) **EP 1 039 157 B1**
(45) Veröffentlichungstag und Bekanntmachung des Hinweises auf die Patenterteilung: **03.11.2004**
(21) Anmeldenummer: 00105607.6
(22) Anmeldetag: 16.03.2000
(51) Int. Cl.: F16C 11/06, F16C 32/06

(54) **Vorrichtung zum Haltern eines Teils und Anwendung der Vorrichtung**
Device for holding an object and use of the device
Dispositif pour supporter un object et usage du dispositif

(30) Priorität: 19.03.1999 DE 19912424
(43) Veröffentlichungstag der Anmeldung: 27.09.2000
(73) Patentinhaber: Infineon Technologies AG, 81669 München (DE)
(72) Erfinder: Auracher, Franz, Dr., 82065 Baierbrunn (DE); Wittmann, Julius, 82041 Oberhaching (DE)
(74) Vertreter: Müller, Wolfram Hubertus, Dipl.-Phys.

(56) Entgegenhaltungen:
- DE-A- 3 930 629
- GB-A- 2 176 546
- US-A- 2 695 199
- US-A- 4 491 306
- US-A- 4 798 478

## Beschreibung

Die Erfindung betrifft eine Vorrichtung mit den Merkmalen gemäß dem Oberbegriff des Anspruchs 1.

Eine derartige Vorrichtung ist aus der deutschen Offenlegungsschrift DE 39 30 629 A1 bekannt. Die vorbekannte Vorrichtung weist eine Kugelkalotte als Haltevorrichtung auf. An einer ebenen Fläche der Kugelkalotte ist ein zu halterndes Bauteil beispielsweise durch Einspannen befestigt. Durch Schwenken der Kugelkalotte in einem die Kugelkalotte haltenden, konkaven Aufnahmekörper kann das zu halternde Bauteil relativ zu einem starr befestigten Bauteil ausgerichtet werden. Die Vorrichtung weist ein Gleitmittel zwischen dem konkav sphärischen Oberflächenabschnitt des Aufnahmekörper und dem konvex sphärischen Oberflächenabschnitt der Kugelkalotte auf. Durch die Gleitschicht kann der Reibungskoeffizient zwischen der Kugelkalotte und dem Aufnahmekörper so gering gehalten werden, dass Abmessungen und Geometrie der Vorrichtung auf den zur Ausrichtung nötigen Anpressdruck keinen Einfluss mehr haben, und dieser Anpressdruck kann sehr klein sein.

Der Erfindung liegt die Aufgabe zugrunde, eine Vorrichtung zum Haltern eines Teils bereitzustellen, die eine einfache Justage ermöglicht.

Diese Aufgabe wird durch die im Anspruch 1 angegebenen Merkmale gelöst.

Ein wesentlicher Vorteil der erfindungsgemäßen Vorrichtung ist darin zu sehen, dass sie eine optische Vor-Justage ermöglicht. Insbesondere bei einer Verwendung der erfindungsgemäßen Vorrichtung zum Befestigen eines Gehäuses zum Halten einer optischen Linse an einem optischen Sendemodul ist es vorteilhaft, wenn ein Befestigungswerkzeug zum wahlweise lösbaren Befestigen des zu halternden Teils auf dem Halterungskörper vorhanden ist und wenn außerdem in diesem Befestigungswerkzeug eine Abbildungsoptik und ein optischer Detektor derart angeordnet sind, dass die Abbildungsoptik Licht, das durch eine im Oberflächenabschnitt zum Anbringen des zu halternden Teils des Halterungskörpers ausgebildete Öffnung in diesen Körper eintritt, auf den Detektor fokussiert. Dadurch ist eine Vorjustierung des Halterungskörpers bezüglich eines vom Modul abgestrahlten Lichtstrahls ermöglicht, auf den die optische Linse im Gehäuse zu justieren ist.

Eine bevorzugte und vorteilhafte Ausgestaltung der erfindungsgemäßen Vorrichtung weist eine Einrichtung zur zumindest zeitweiligen Erzeugung der aus dem Gleitmittel bestehenden Gleitschicht zwischen dem konkav sphärischen Oberflächenabschnitt des Aufnahmekörpers und dem aufgenommenen konvex sphärischen Oberflächenabschnitt des Halterungskörpers auf.

In diesem Fall kann vorteilhafterweise so vorgegangen werden, daß während des Ausrichtvorganges die Gleitschicht erzeugt wird, um die Reibung zwischen Halterungskörper und Aufnahmekörper so gering wie möglich zu halten. Nach erfolgter Selbstausrichtung kann zu einer gewissen Fixierung der Ausrichtung die Gleitschicht beseitigt und so diese Reibung wieder erhöht werden.

Besonders einfach läßt sich dies Durchführen, wenn das Gleitmittel ein Gas, beispielsweise Luft ist.

In diesem Fall ist es hinsichtlich eines einfachen Aufbaus vorteilhaft, wenn die Einrichtung zur Erzeugung der Gleitschicht aus dem Gas wenigstens eine in einem der beiden sphärischen Oberflächenabschnitte, vorzugsweise eine im Oberflächenabschnitt des Aufnahmekörpers ausgebildete Einströmöffnung zum Einströmenlassen des Gases unter Druck in einen Zwischenraum zwischen den beiden sphärischen Oberflächenabschnitten aufweist.

Die Einrichtung zur Erzeugung der Gleitschicht aus dem Gas kann dabei eine vorzugsweise außerhalb des Halterungskörpers und Aufnahmekörpers angeordnete wahlweise betätigbare Einrichtung zur Erzeugung des Gases unter dem Druck aufweisen, die mit der Einströmöffnung verbunden ist, vorzugsweise durch einen im Aufnahmekörper ausgebildeten und zur Einströmöffnung führenden Kanal und eine den Kanal mit dieser Einrichtung verbindende Druckleitung.

Durch die zwischen dem konvex sphärischen Oberflächenabschnitt des Halterungskörpers und dem konkav sphärischen Oberflächenabschnitt des Aufnahmekörpers ausgebildete Gleitschicht aus dem unter Druck stehenden Gas ist ein Luftlager für den Halterungskörper realisiert, das vorteilhafterweise ein praktisch reibungsfreies und damit widerstandsloses Verdrehen des Halterungskörpers um einen Kugelmittelpunkt des konvex sphärischen Oberflächenabschnitts in allen Richtungen ermöglicht.

Eine bessere Fixierung der Ausrichtung nach dem Ausrichtvorgang kann vorteilhafterweise durch eine Einrichtung zur zeitweiligen Erzeugung eines Unterdrucks zwischen den beiden sphärischen Oberflächenabschnitten zum gegenseitigen Aneinanderdrücken dieser beiden Oberflächenabschnitte erreicht werden. Dabei können vorteilhafterweise der Halterungskörper und Aufnahmekörper so fest relativ zueinander fixiert werden, daß eine Veränderung der Ausrichtung des Halterungskörpers und damit des auf diesem Körper gehalterten Teils praktisch nur noch mit Gewalt möglich ist.

Die Einrichtung zur zeitweiligen Erzeugung des Unterdrucks zwischen den beiden sphärischen Oberflächenabschnitten kann ähnlich einfach wie eine Einrichtung zur Erzeugung des Drucks aufgebaut sein, wenn die Einrichtung zur Erzeugung des Unterdrucks wenigstens eine in einem dieser beiden Oberflächenabschnitt, vorzugsweise dem Abschnitt des Aufnahmekörpers ausgebildete Absaugöffnung zum Absaugen des Gases im Zwischenraum zwischen den beiden sphärischen Oberflächenabschnitten aufweist.

Ähnlich wie bei der Einrichtung zur Erzeugung des Drucks ist es auch hier vorteilhaft, wenn die Einrichtung zur Erzeugung des Unterdrucks zwischen den beiden sphärischen Oberflächenabschnitten eine vozugsweise außerhalb des Halterungskörpers und Aufnahmekörpers angeordnete wahlweise betätigbare Einrichtung zur Erzeugung des Unterdrucks aufweist, die mit der Absaugöffnung verbunden ist, vorzugsweise durch einen im Aufnahmekörper ausgebildeten und zur Absaugöffnung führenden Kanal und eine den Kanal mit dieser Einrichtung verbindende Unterdruckleitung.

Vorteilhafterweise sind im Halterungskörper und Aufnahmekörper Aussparungen ausgebildet, die zumindest zwei in zueinander schrägen Richtungen auf den konvex sphärischen Oberflächenabschnitt gerichtete Lichtstrahlen ungehindert durch den Aufnahme- und Halterungskörper und aus dem Oberflächenabschnitt zum Anbringen des zu halternden Teils treten lassen. Werden in diesem Fall als Lichtstrahlen Laserstrahlen zum Schweißen verwendet, können zwei oder mehrere voneinander getrennte Schweißstellen gleichzeitig erreicht werden. Es können auf diese Weise zwei planparallel zueinander ausgerichtete und miteinander zu verbindende Teile gleichzeitig an zwei oder mehreren getrennten Punkten gleichzeitig miteinander verschweißt werden.

Häufig ist das zu halternde Teil zumindest abschnittsweise zylindrisch und weist eine bezüglich einer anderen ebenen Fläche planparallel auszurichtende ebene Stirnfläche auf. In diesem Fall ist das Befestigungswerkzeug vorzugsweise ein Spannwerkzeug mit um eine Achse gruppierten und senkrecht, d.h. radial zu dieser Achse verstellbaren Spannbacken, zwischen denen das Teil mit seiner Zylinderachse koaxial zur Achse des Werkzeugs gehalten werden kann. Das Spannwerkzeug ist vorzugsweise so auf dem Halterungskörper befestigt, daß die Achse des Spannwerkzeugs mit einer durch den Kugelmittelpunkt des konvex spärischen Oberflächenabschnitts des Halterungskörpers gehenden Achse zusammenfällt.

Zumindest abschnittsweise zylindrisch sind beispielsweise Gehäuse zum Halten von optischen Linsen oder Faserenden, die an optische Sendemodule über eine ebene Endfläche dieser Module anzuschließen sind. Bei einem Gehäuse zum Halten eines Faserendes hängt die dieses Ende bildende Faser üblicherweise in Form eines längeren Faserschwanzes vom Gehäuse, der beispielsweise einige Dezimeter oder mehr lang sein kann. Dieser Faserschwanz kann beim Befestigen des Gehäuses am Halterungskörper stören.

Dieses Problem läßt sich ganz oder zumindest teilweise beseitigen, wenn im Halterungskörper ein Schlitz zum Aufnehmen der Faser ausgebildet ist.

Der Schlitz erstreckt sich zweckmäßigerweise in der Richtung der Zylinderachse des auf dem Halterungskörper gehalterten Gehäuses ganz durch den Halterungskörper, in Richtung senkrecht zu dieser Achse aber nur zu einem Teil, damit der Halterungskörper zusammenbleibt und nicht in Teile zerfällt.

Da der Halterungskörper auf dem Aufnahmekörper angeordnet ist und sich zwischen diesen Körpern kaum ein Zwischenraum befindet, ist es zweckmäßig, wenn im Aufnahmekörper ein Schlitz zum Aufnehmen der Faser ausgebildet ist, der zum Schlitz des Halterungskörpers fluchtet.

Ein wahlweises Befestigen und wieder Lösen eines zu halternden Teils in dem auf dem Halterungskörper befestigten Befestigungswerkzeug kann vorteilhafterweise durch eine vorzugsweise pneumatische Einrichtung zu einem wahlweisen Öffnen und Schließen des Befestigungswerkzeugs erreicht werden.

Bevorzugter- und vorteilhafterweise ist eine solche Einrichtung zum wahlweisen Öffnen und Schließen des Befestigungswerkzeugs von außen betätigbar im Halterungskörper ausgebildet.

Besteht beispielsweise das Befestigungswerkzeug aus einem Spannwerkzeug mit zwei oder mehreren verstellbaren Spannbakken, so kann die im Innern des Halterungskörpers angeordnete Einrichtung zum wahlweisen Öffnen und Schließen des Spannwerkzeugs pro Spannbacke je einen hydraulischen oder vorzugsweise pneumatischen Zylinder und eine Kraftübertragungseinrichtung zur Übertragung einer Kolbenkraft des Zylinders auf diese Spannbacke zum Bewegen dieser Spannbacke wahlweise in Richtung eines Schließens oder Öffnens des Spannwerkzeugs aufweisen.

Jeder pneumatische Zylinder ist vorzugsweise mit einer im konvex sphärischen Oberflächenabschnitt des Halterungskörpers ausgebildeten Ein- und Ausströmöffnung durch beispielsweise einen im Halterungskörper ausgebildeten Kanal verbunden. Gegenüber der Ein- und Ausströmöffnung ist im konkav sphärischen Oberflächenabschnitt des Aufnahmekörpers eine Ein- und Ausströmöffnung angeordnet, die mit einer vorzugsweise außer halb des Halterungskörpers und Aufnahmekörpers angeordneten Einrichtung zum wahlweisen Erzeugen eines Drucks und Unterdrucks verbunden ist, vorzugsweise durch einen im Aufnahmekörper ausgebildeten und zur Ein- und Ausströmöffnung führenden Kanal und eine diesen Kanal mit dieser Einrichtung verbindende Druck- und Unterdruckleitung. Die im konkav sphärischen Oberflächenabschnitt des Aufnahmekörpers ausgebildete Ein- und Ausströmöffnung weist vorzugsweise einen größeren Durchmesser als die im konvex sphärischen Oberflächenabschnitt des Halterungskörpers ausgebildete Ein- und Ausströmöffnung auf. Dies hat den Vorteil, daß ein Zylinder auch bei relativ zum Aufnahmekörper verkipptem Halterungskörper betätigt werden kann, solange die Ein- und Ausströmöffnung des verkippten Halterungskörpers noch im Bereich der Ein- und Ausströmöffnung des Aufnahmekörpers liegt.

In jedem Fall ermöglicht die Einrichtung zu einem wahlweisen Öffnen und Schließen des Befestigungswerkzeugs vorteilhafterweise eine Betätigung des Werkzeugs zum Befestigen oder Lösen des zu halternden Teils unabhängig davon, ob der Halterungskörper gerade beweglich auf dem Aufnahmekörper gelagert oder gerade auf dem Aufnahmekörper fixiert ist.

Vorzugsweise sind die Abbildungsoptik und der optische Detektor auf einer durch den Kugelmittelpunkt des konvex spärischen Oberflächenabschnitts des Halterungskörpers gehenden Achse des Halterungskörpers angeordnet. In diesem Fall kann der Halterungskörper vorteilhafterweise so bezüglich eines vom Modul abgestrahlten Lichtstrahls vorjustiert werden, daß diese Achse des Halterungskörpers mit einer Achse dieses Lichtstrahls zusammenfällt. Zweckmäßig ist es, die Abbildungsoptik und den optischen Detektor fest in einem vorzugsweise auswechselbaren Befestigungswerkzeug anzuordnen, das koaxial zur Achse des Halterungskörpers angeordnet ist und auf dem das Gehäuse mit der Linse oder dem Faserende koaxial zu dieser Achse gehaltert ist.

Die Abmessungen der erfindungsgemäßen Vorrichtung sind weitgehend beliebig. Insbesondere ist ein besonderer Vorteil darin zu sehen, daß ein Radius des Oberflächenabschnitts des Halterungskörpers nicht nur im Millimeterbereich und darunter liegen, sondern größer als ein Zentimeter, beispielsweise fünf Zentimeter sein kann.

Eine erfindungsgemäße Vorrichtung ist besonders vorteilhaft zum parallelen Ausrichten eines ebenen Oberflächenabschnitts des Teils zu einem diesem Oberflächenabschnitt zugekehrten ebenen Oberflächenabschnitt eines anderen Teils zu verwenden, wobei das eine Teil auf dem Halterungskörper so befestigt wird, daß der ebene Oberflächenabschnitt dieses Teils vom Halterungskörper und Aufnahmekörper abgekehrt ist, und wobei der ebene Oberflächenabschnitt des so befestigten einen Teils und der ebene Oberflächenabschnitt des anderen Teils durch Bewegen des Halterungskörpers mit dem Aufnahmekörper und des anderen Teils relativ zueinander flächig in Kontakt miteinander gebracht werden.

Die flächig in Kontakt miteinander gebrachten ebenen Oberflächenabschnitte des auf dem Halterungskörper befestigten einen Teils und des anderen Teils können vorteilhafterweise durch Laserschweißen fest miteinander verbunden werden. Dabei kann vorteilhafterweise als das eine Teil eine optische Linsenund/oder Faserhalterung und als das andere Teil ein optischer Modul, beispielsweise in Form eines Lasermoduls, an den die optische Linsen- und/oder Faserhalterung präzise anzukoppeln ist, verwendet werden.

Die Erfindung wird in der nachfolgenden Beschreibung anhand der Figuren beispielhaft näher erläutert. Es zeigen:
- Figur 1: in perspektivischer Darstellung den Halterungskörper eines Ausführungsbeispiels der erfindungsgemäßen Vorrichtung,
- Figur 1a: eine Draufsicht auf in einer gemeinsamen Ebene liegende bestimmte Achsen des Halterungskörpers nach Figur 1,
- Figur 2: in perspektivischer Darstellung den Aufnahmekörper des Ausführungsbeispiels nach Figur 1,
- Figur 3: einen vertikalen Schnitt durch das Ausführungsbeispiel, wobei der Halterungskörper im Aufnahmekörper aufgenommen ist,
- Figur 4: in perspektivischer Darstellung ein Befestigungswerkzeug des Ausführungsbeispiels zum Haltern eines Teils, und
- Figur 5: einen Schnitt längs der Achse A durch ein eine Abbildungsoptik und einen optischen Detektor enthaltendes Befestigungswerkzeug des Ausführungsbeispiels.

Die Figuren sind schematisch und nicht maßstäblich.

In den Figuren sind, soweit dargestellt, das auf dem Ausführungsbeispiel zu halternde Teil mit 1, der Halterungskörper des Beispiels mit 2, der Aufnahmekörper mit 3 und ein beispielsweise auswechselbar im Halterungskörper 2 angeordnetes Befestigungswerkzeug zum halten des Teils 1 auf dem Halterungskörper 2 mit 8 bezeichnet.

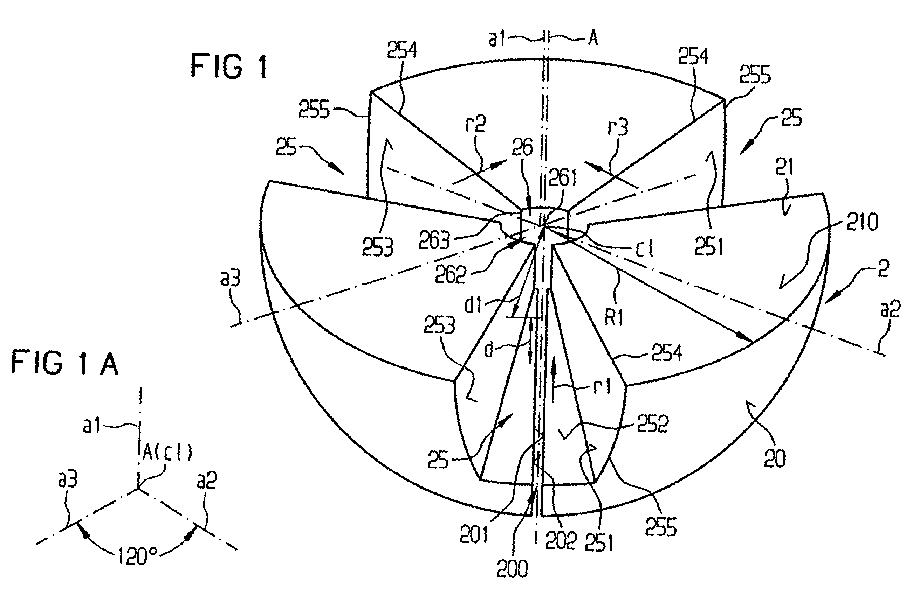

Der in Figur 1 allein dargestellte Halterungskörper 2 weist einen konvex sphärischen Oberflächenabschnitt 20 und einen von diesem Abschnitt 20 abgekehrten, vorzugsweise ebenen Oberflächenabschnitt 21 auf, an dem das zu halternden Teil 1 anzubringen ist.

Eine durch den Kugelmittelpunkt Ct des konvex sphärischen Oberflächenabschnitts 20 gehende zentrale Achse dieses Abschnitts 20 ist mit A bezeichnet und verläuft in der Zeichenebene der Figuren 1 und 2 bis 5, in denen sie zu sehen ist, vertikal.

Der Radius des konvex sphärischen Oberflächenabschnitts 20 ist mit R1 bezeichnet.

Der ebene Oberflächenabschnitt 21 des Halterungskörpers 2 ist beispielsweise so angeordnet, daß die Achse A senkrecht zu ihm ist.

In der Ebene des Oberflächenabschnitts 21 gehen beispielsweise drei im Winkel von 120° zueinander versetzte radiale Achsen a1, a2 und a3 durch die Achse A und den Kugelmittelpunkt ct. Diese radialen Achsen a1, a2 und a3 sind in der Figur 1a in senkrechter Draufsicht auf den ebenen Oberflächenabschnitt 21 noch einmal dargestellt, so daß in der Figur 1a die Achse A senkrecht zur Zeichenebene dieser Figur ist und die radialen Achsen a1, a2 und a3 in dieser Zeichenebene liegen.

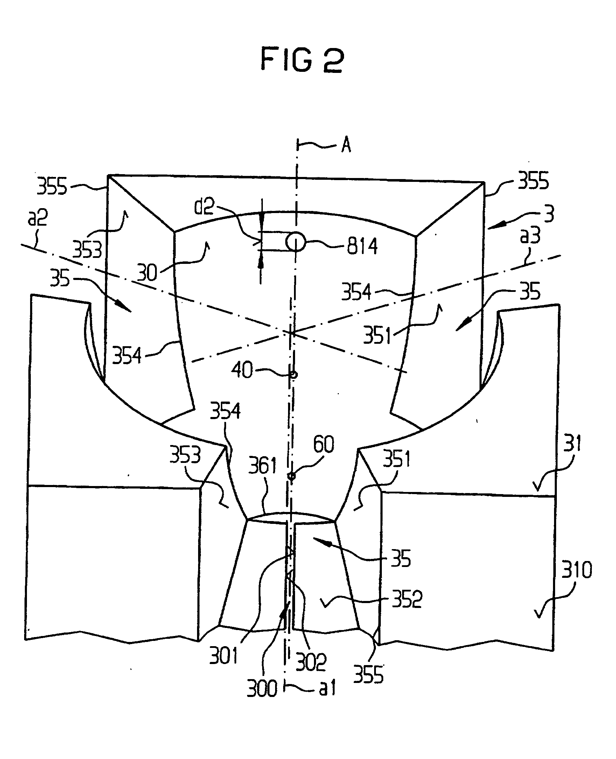

Die radiale Achse a1 ist in den Figuren 1 und 2 nur scheinbar parallel zur Achse A. In Wirklichkeit ist sie wie die anderen beiden Achsen a2 und a3 senkrecht zur Achse A angeordnet.

Unter jeder radialen Achse a1, a2 bzw. a3 ist je eine Aussparung 25 im Halterungskörper 2 ausgebildet, die sich in Richtung der jeweiligen radialen Achse a1, a2 bzw. a3 zwischen dem konvex sphärischen Oberflächenabschnitt 20 und einer zur Achse A koaxialen Bohrung 26 des Halterungskörpers 2 zur Aufnahme eines Befestigungswerkzeugs erstreckt.

Jede Aussparung 25 definiert eine kreissektorförmige Öffnung 254 im ebenen Oberflächenabschnitt 21, eine im Winkel an diese Öffnung 254 angrenzende Öffnung 255 im konvex sphärischen Oberflächenabschnitt 20 und eine Öffnung 263 in der Innenwand 262 der Bohrung 26 des Halterungskörpers 2, wobei die Öffnung 263 in der Innenwand 262 der Bohrung 26 im Winkel an die im ebenen Oberflächenabschnitt 21 des Halterungskörpers 2 ausgebildete Öffnung 254 grenzt.

Jede Aussparung 25 weist zwei einander zugekehrte, in radialer Richtung zur Achse A konvergierende, jeweils im Winkel zum ebenen Oberflächenabschnitt 21 des Halterungskörpers 2 angeordnete, vorzugsweise ebene Seitenwände 251 und 253 und eine diese Seitenwände 251 und 253 miteinander verbindende, vorzugsweise ebenfalls ebene Bodenfläche 252 auf.

Die Bodenfläche 252 jeder Aussparung 25 erstreckt sich wie deren Seitenwände 251 und 253 zwischen den Öffnungen 255 und 263, ist im Winkel zu jeder Seitenwand 251 und 253 angeordnet und erstreckt sich in radialer Richtung zur Achse A derart schräg zum ebenen Oberflächenabschnitt 21, daß ein bezüglich dieses Abschnitts 21 vertikaler Abstand d der Bodenfläche 252 von diesem Abschnitt 21 mit abnehmendem radialen Abstand d1 von der Achse A abnimmt.

Durch die von den Aussparungen 25 definierten Öffnungen 254 im ebenen Oberflächenabschnitt 21 des Halterungskörpers 2 ist dieser Abschnitt 21 in voneinander getrennte kreissektorförmige ebene Abschnitte 210 geteilt, deren jeder sich in Richtung einer ihm zugehörigen der radialen Achsen a1, a2 und a3 erstreckt.

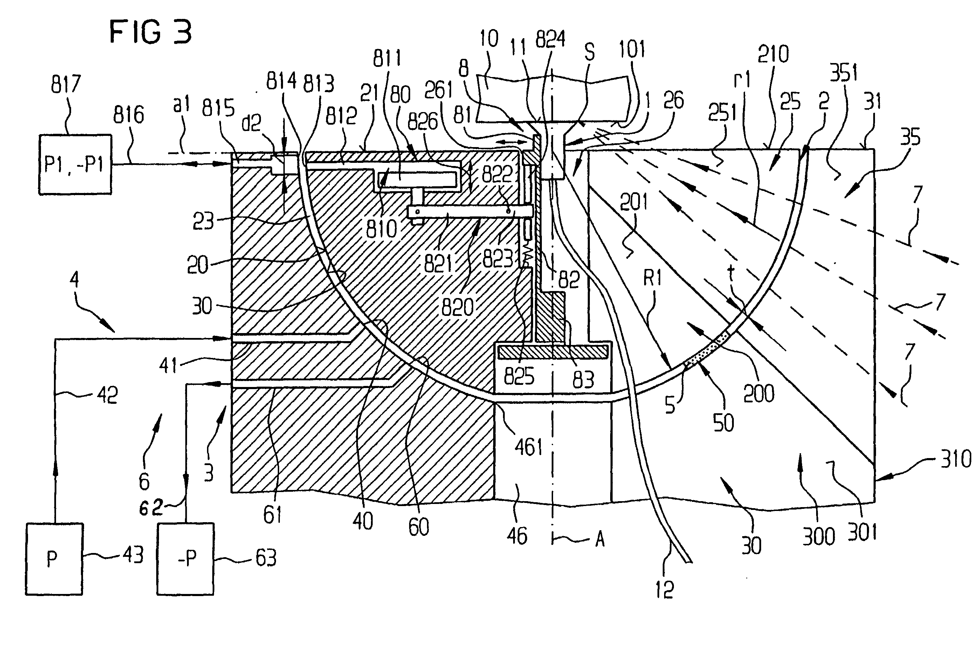

Durch jede Aussparung 25 kann ein in Richtung r1, r2 bzw. r3 schräg zum ebenen Oberflächenabschnitt 21 sich ausbreitender Lichtstrahl 7 (siehe Figur 3) ungehindert durch den Halterungskörper 2 gehen und aus dem ebenen Oberflächenabschnitt 21 austreten. Beispielsweise kann der Lichtstrahl 7 ein zu einem Laserschweißen dienender fokussierter Laserstrahl sein, der auf einen vor dem ebenen Oberflächenabschnitt 21 des Halterungskörpers 2 liegenden Punkt S fokussiert ist, an dem zu schweißen ist. Im vorliegenden speziellen Fall dreier vorhandener Aussparungen 25 können gleichzeitig drei Laserstrahlen 7 in zueinander schrägen Richtungen r1, r2 und r3 auf drei vor dem ebenen Oberflächenabschnitt 21 des Halterungskörpers 2 liegende Punkte S fokussiert werden, bei denen jeweils zu schweißen ist.

Der in Figur 2 dargestellte Aufnahmekörper 3 des Ausführungsbeispiels ist im wesentlichen komplementär zum Halterungskörper 2 ausgebildet, d.h., der Aufnahmekörper 3 weist einen eine Gleitsitzfläche für den konvex sphärischen Oberflächenabschnitt 20 des Halterungskörpers 2 bildenden konkav sphärischen Oberflächenabschnitt 30 auf.

Der Aufnahmekörper 3 ist so angeordnet und dargestellt, daß der Kugelmittelpunkt des konkav sphärischen Oberflächenabschnitts 30 und eine durch diesen Kugelmittelpunkt gehende zentrale Achse dieses Abschnitts 30 mit dem Kugelmittelpunkt ct und der zentralen Achse A des konvex sphärischen Oberflächenabschnitts 20 des Halterungskörpers 2 zusammenfällt.

Der Aufnahmekörper 3 weist beispielsweise einen den konkav sphärischen Oberflächenabschnitt 30 umgebenden ebenen Oberflächenabschnitt 31 auf, der parallel zu der von den radialen Achsen a1, a2 und a3 aufgespannten Ebene und damit senkrecht zur Achse A ist.

Auch ist im Aufnahmekörper 3 unter jeder radialen Achse a1, a2 bzw. a3 je eine Aussparung 35 ausgebildet, die sich in Richtung der jeweiligen radialen Achse a1, a2 bzw. a3 zwischen dem konkav sphärischen Oberflächenabschnitt 30 und einer von diesem Abschnitt 30 abgekehrten Außenfläche 310 des Aufnahmekörpers 3 erstreckt.

Jede Aussparung 35 definiert je eine Öffnung 354 im konkav sphärischen Oberflächenabschnitt 30 und je eine Öffnung 355 in der Außenfläche 310, wobei diese beiden Öffnungen 354 und 355 durch einander zugekehrte Seitenwände 351 und 353 und eine Bodenfläche 352 dieser Aussparung 35 miteinander verbunden sind.

Jede Aussparung 35 fluchtet mit je einer Aussparung 25 des Halterungskörpers 2 und ist vorzugsweise so ausgebildet, daß die Aussparung 35 in Richtung der radialen Achse a1 , a2 oder a3 dieser beiden Aussparungen 25 und 35 eine Fortsetzung der Aussparung 25 ist, wenn diese Richtung von der zentralen Achse A fortweist.

Durch die Aussparungen 35 kann sich jeder Lichtstrahl 7 ungehindert sowohl durch den Aufnahmekörper 3 als auch durch den Halterungskörper 2 ausbreiten.

Die Figur 3 zeigt das zusammengesetzte Ausführungsbeispiel in einem vertikalen Schnitt, der in der von der zentralen Achse A und der radialen Achse a1 aufgespannten Ebene geführt ist, wobei die Schnittfläche der in den Figuren 1 und 2 rechts von dieser Ebene liegenden Schnitthälfte des Halterungskörpers 2 und Aufnahmekörpers 3 dargestellt ist und die Achse A jetzt in der Zeichenebene der Figur 3 liegt.

Zwischen dem konkav sphärischen Oberflächenabschnitt 30 des Aufnahmekörpers 3 und dem in diesem Abschnitt 30 aufgenommenen konvex sphärischen Oberflächenabschnitt 20 des Halterungskörpers 2 befindet sich ein Gleitmittel 50, das vorzugsweise ein Gas unter Druck ist, der in bezug auf einen Umgebungsdruck ein Überdruck ist.

Das Gleitmittel 50 ist zwischen den beiden sphärischen Oberflächenabschnitten 20 und 30 über die ganze Fläche der einander gegenüberliegenden Bereiche dieser Abschnitte 20 und 30 ausgedehnt und bildet eine Gleitschicht 5, von der in der Figur 3 nur ein Bruchteil dargestellt ist. Durch diese Gleitschicht ist der Halterungskörper 2 praktisch reibungsfrei auf dem Aufnahmekörper 3 gelagert.

Der die Dicke der gasförmigen Gleitschicht 5 bestimmende Abstand t zwischen den beiden sphärischen Oberflächenabschnitten 20 und 30 liegt vorzugsweise im Mikrometerbereich und kann beispielsweise 10 Mikrometer betragen.

Die gasförmige Gleitschicht 5 kann durch eine Einrichtung 4 zeitweilig erzeugt werden. Diese Einrichtung 4 weist eine im konkav sphärischen Oberflächenabschnitt 30 ausgebildete Einströmöffnung 40 zum Einströmenlassen des Gases 50 unter einem Druck P in den Zwischenraum 23 zwischen den beiden sphärischen Oberflächenabschnitten 20 und 30 und eine mit der Einströmöffnung 40 verbundene wahlweise betätigbare Einrichtung 43 zur Erzeugung des Gases 50 unter dem Druck P auf. Die Einrichtung 43 ist durch einen im Aufnahmekörper 2 ausgebildeten und zur Einströmöffnung 40 führenden Kanal 41 und eine den Kanal 41 mit dieser Einrichtung 43 verbindende Druckleitung 42 verbunden.

Durch eine Einrichtung 6 kann zeitweilig ein Unterdruck -P zwischen den beiden sphärischen Oberflächenabschnitten 20 und 30 zum gegenseitigen Aneinanderdrücken dieser beiden Oberflächenabschnitte 20 und 30 und Fixieren des Halterungskörpers 2 und Aufnahmekörpers 3 relativ zueinander erzeugt werden.

Die Einrichtung 6 weist eine im konkav sphärischen Oberflächenabschnitt 30 ausgebildete Absaugöffnung 60 zum Absaugen des Gases 50 im Zwischenraum 23 zwischen den beiden sphärischen Oberflächenabschnitten 20 und 30 eine wahlweise betätigbare Einrichtung 63 zur Erzeugung des Unterdrucks -P auf, die mit der Absaugöffnung 60 verbunden ist. Die Einrichtung 63 ist durch einen im Aufnahmekörper 2 ausgebildeten und zur Absaugöffnung 60 führenden Kanal 61 und eine den Kanal 61 mit dieser Einrichtung 63 verbindende Unterdruck- bzw. Saugleitung 62 verbunden.

Die Einrichtung 4 und die Einrichtung 6 können unabhängig voneinander und insbesondere abwechselnd betätigt werden.

Auf dem Halterungskörper 2 ist ein Befestigungswerkzeug 8 zum wahlweise lösbaren Befestigen des zu halternden Teils 1 auf dem Halterungskörper 2 befestigt, das in der zentralen Bohrung 26 des Halterungskörpers 2 auswechselbar angeordnet ist.

Beispielsweise besteht das Befestigungswerkzeug 8 aus einer Spannzange, die im in den Halterungskörper 2 eingebauten Zustand um die zentrale Achse A gruppierte und radial zu dieser Achse A verstellbare Spannbacken 81 aufweist, zwischen denen das beispielsweise zylindrische Teil 1 mit seiner Zylinderachse koaxial zur Achse A gehalten werden kann.

Beispielsweise weist die Spannzange 8 drei Spannbacken 81 auf, deren jede durch je eine entlang der Achse A sich erstreckende längliche einzelne Feder 82 mit einem allen Federn 82 gemeinsamen massiven Sockel 83 fest verbunden ist.

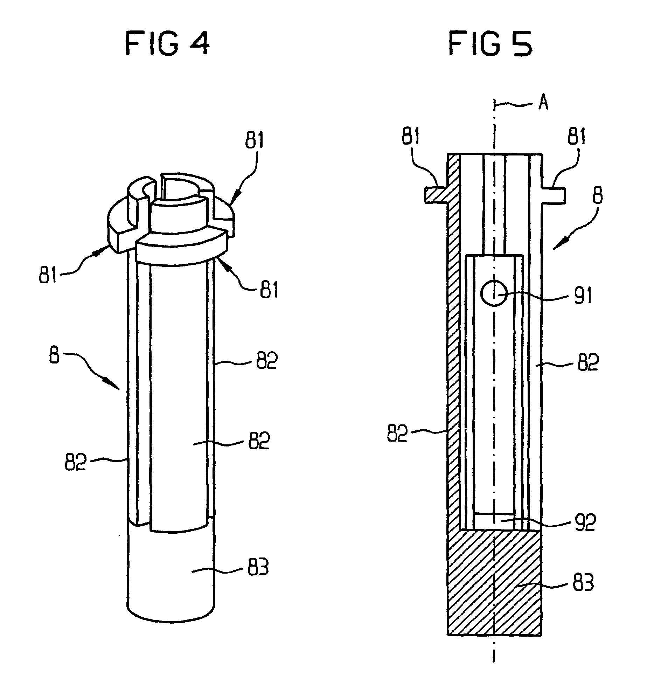

In der Figur 3 ist diese Spannzange 8 teilweise und im Schnitt sowie in den Halterungskörper 2 eingebaut dargestellt, während in der Figur 4 diese Spannzange 8 ausgebaut und perspektivisch dargestellt ist.

In der Figur 3 hält die eingebaute Spannzange 8 beispielsweise ein Teil 1 in Form eines zylindrischen Gehäuses zum Halten des Endes einer Faser 12. Dieses gehaltene Gehäuse 1 weist eine vom ebenen Oberflächenabschnitt 21 des Halterungskörpers 2 abgekehrte ebene Stirnfläche 11 auf, die planparallel zu einem dieser Stirnfläche 11 zugekehrten ebenen Oberflächenabschnitt 101 eines anderen Teils 10, beispielsweise ein Lasermodul, anzuordnen und auszurichten ist. Diese Ausrichtung erfolgt beispielsweise selbsttätig, wenn die Stirnfläche 11 mit dem fest angeordneten ebenen Oberflächenabschnitt 101 bei luftgelagertem Halterungskörper 2 unter einem leichten Andruck in Kontakt gebracht wird. Durch nachfolgendes Fixieren des Halterungskörpers 2 relativ zum Aufnahmekörper 3 kann diese Ausrichtung sicher beibehalten werden, beispielsweise für ein Mehrpunkt-Laserschweißen, bei dem die Teile 1 und 2 fest miteinander verbunden werden.

Im Halterungskörper 2 und Aufnahmekörper 3 ist jeweils ein Schlitz 200 bzw. 300 zum Aufnehmen der optischen Faser 12 ausgebildet. Gemäß den Figuren 1 bis 3 erstreckten sich die Schlitze 200 und 300 längs der radialen Achse a1 in der darunter befindlichen Ausnehmung 25 bzw. 35 des Halterungskörpers 2 bzw. Aufnahmekörpers 3 hintereinander von der Außenfläche 310 über die sphärischen Oberflächenabschnitte 30 und 20 bis zur zentralen Bohrung 26. Der Schlitz 300 ist durch einander zugekehrte ebene Seitenwände 301 und 302 begrenzt, der Schlitz 200 durch einander zugekehrte ebene Seitenwände 201 und 202. Jede der Seitenwände 201, 202, 301 und 302 ist parallel zu der von der Achse A und der radialen Achse a1 aufgespannten Ebene.

Im Innern des Halterungskörpers 2 ist eine Einrichtung 80 zum wahlweisen Öffnen und Schließen der Spannzange 8 ausgebildet, die pro Spannbacke 81 je einen pneumatischen Zylinder 810 und eine Kraftübertragungseinrichtung 820 zur Übertragung einer Kraft eines Kolbens 811 im Zylinder 810 auf diese Spannbacke 81 zum Bewegen dieser Spannbacke 81 wahlweise in Richtung eines Schließens oder Öffnens der Spannzange 8 aufweist.

Jeder pneumatische Zylinder 810 ist vorzugsweise mit einer im konvex sphärischen Oberflächenabschnitt 20 des Halterungskörpers 2 ausgebildeten Ein- und Ausströmöffnung 813 durch beispielsweise einen im Halterungskörper 2 ausgebildeten Kanal 812 verbunden. Gegenüber der Ein- und Ausströmöffnung 813 ist im konkav sphärischen Oberflächenabschnitt 30 des Aufnahmekörpers 3 eine Ein- und Ausströmöffnung 814 angeordnet, die mit einer vorzugsweise außerhalb des Halterungskörpers 2 und Aufnahmekörpers 3 angeordneten Einrichtung 817 zum wahlweisen Erzeugen eines Drucks P1 und Unterdrucks -P1 verbunden ist, vorzugsweise durch einen im Aufnahmekörper 3 ausgebildeten und zur Ein- und Ausströmöffnung 814 führenden Kanal 815 und eine diesen Kanal 815 mit dieser Einrichtung 817 verbindende Druck- und Unterdruckleitung 816.

Ein Durchmesser d2 der im konkav sphärischen Oberflächenabschnitt 30 des Aufnahmekörpers 3 ausgebildeten Ein- und Ausströmöffnung 814 ist vorzugsweise größer als ein Durchmesser der im konvex sphärischen Oberflächenabschnitt 20 des Halterungskörpers 2 ausgebildeten Ein- und Ausströmöffnung 813. Dies hat den Vorteil, daß der Zylinder 810 auch bei relativ zum Aufnahmekörper 3 verkipptem Halterungskörper 2 betätigt werden kann, solange die Ein- und Ausströmöffnung 813 des verkippten Halterungskörpers 2 noch im Bereich der gegenüberliegenden Ein- und Ausströmöffnung 814 des Aufnahmekörpers 3 liegt.

Die Kraftübertragungseinrichtung 820 weist pro Spannbacke 81 je einen mit dem Kolben 811 verbundenen Drehhebel 821 auf, der um eine zur Achse A und jeweiligen radialen Achse a1, a2 bzw. a3 senkrechte Drehachse 822 drehbar ist und mit einem zwischen der Zange 8 und dieser Drehachse 822 befindlichen Hebelabschnitt 823 beispielsweise über ein Zwischenglied 824 an dieser Spannbacke 81 angreift. Auf der von der Spannbacke 81 abgekehrten Seite dieses Hebelabschnitts 823 drückt eine am Halterungskörper 2 fest abgestützte Feder 825 gegen diesen Abschnitt 823 und damit gegen die Spannbacke 81. Wird der Kolben 811 in Richtung des Doppelpfeiles 826 nach oben bewegt, beispielsweise durch Erzeugen eines Unterdrucks -P1 im Zylinder 810, wird die Feder 825 zusammengedrückt und die Spannbacke 81 entlastet, so daß sie sich öffnet. Wird der Unterdruck fortgenommen, drückt die Feder 825 durch den Hebelabschnitt 823 und das Zwischenglied 824 wieder auf die Spannbacke 81 und schließt diese.

Die Einrichtung 80 zum wahlweisen Öffnen und Schließen der Spannzange 8 ermöglicht eine Betätigung der Zange 8 von außen unabhängig davon, ob der Halterungskörper 2 gerade beweglich auf dem Aufnahmekörper 3 gelagert oder fixiert ist

In der Figur 5 ist eine Spannzange 8 im Längsschnitt dargestellt, die sich von der Zange 8 nach Figur 4 im wesentlichen nur darin unterscheidet, daß in ihr eine Abbildungsoptik 91 und ein optischer Detektor 92 derart angeordnet sind, daß die Abbildungsoptik 91 Licht, das sich entlang der Achse A ausbreitet, auf den Detektor 92 fokussiert. Die Abbildungsoptik 91 und der optische Detektor 92 sind relativ zum Halterungskörper 2 fest angeordnet, sobald die Spannzange 8 fest in diesen Körper 2 eingebaut ist.

## Patentansprüche

1. Vorrichtung zum Haltern eines Teils (1), mit
- einem zum Anbringen und Haltern des Teils (1) vorhandenen Halterungskörper (2), der
- einen konvex sphärischen Oberflächenabschnitt (20) und einen Oberflächenabschnitt (21) zum Anbringen des zu halternden Teils (1) aufweist,
- einem zum drehbaren Lagern des Halterungskörpers (2) vorhandenen Aufnahmekörper (3), der
- einen eine Gleitsitzfläche für den konvex sphärischen Oberflächenabschnitt (20) des Halterungskörpers (2) bildenden konkav sphärischen Oberflächenabschnitt (30) aufweist, und
- mit einem Gleitmittel (50) zur Anordnung zwischen dem konkav sphärischen Oberflächenabschnitt (30) des Aufnahmekörpers (3) und dem in diesem Abschnitt (30) aufgenommenen konvex sphärischen Oberflächenabschnitt (20) des Halterungskörpers (2) in Form einer Gleitschicht (5),
**dadurch gekennzeichnet, dass**
- auf dem Halterungskörper (2) ein Befestigungswerkzeug (8) zum wahlweise lösbaren Befestigen des zu halternden Teils (1) befestigt ist und
- im Befestigungswerkzeug (8) eine Abbildungsoptik (91) und ein optischer Detektor (92) derart angeordnet sind, daß die Abbildungsoptik (91) Licht, das durch eine im Oberflächenabschnitt (21) zum Anbringen des zu halternden Teils (1) des Halterungskörpers (2) ausgebildete Öffnung (261) in diesen Körper (2) eintritt, auf den Detektor (92) fokussiert.

2. Vorrichtung nach Anspruch 1, **gekennzeichnet durch** eine Einrichtung (4) zur zumindest zeitweiligen Erzeugung der aus dem Gleitmittel (50) bestehenden Gleitschicht (5) zwischen dem konkav sphärischen Oberflächenabschnitt (30) des Aufnahmekörpers (3) und dem aufgenommenen konvex sphärischen Oberflächenabschnitt (20) des Halterungskörpers (2).

3. Vorrichtung nach Anspruch 2, **dadurch gekennzeichnet, daß** das Gleitmittel (50) ein Gas ist.

4. Vorrichtung nach Anspruch 3, **dadurch gekennzeichnet, daß** die Einrichtung (4) zur Erzeugung der Gleitschicht (50) aus dem Gas (50) wenigstens eine in einem der beiden sphärischen Oberflächenabschnitte (20, 30) ausgebildete Einströmöffnung (40) zum Einströmenlassen des Gases (50) unter Druck (P) in einen Zwischenraum (23) zwischen den beiden sphärischen Oberflächenabschnitten (20, 30) aufweist.

5. Vorrichtung nach Anspruch 4, **dadurch gekennzeichnet, daß** die Einrichtung (4) zur Erzeugung der Gleitschicht (50) aus dem Gas (50) eine wahlweise betätigbare Einrichtung (43) zur Erzeugung des Gases (50) unter dem Druck (P) aufweist, die mit der Einströmöffnung (40) verbunden ist.

6. Vorrichtung nach einem der Ansprüche 3 bis 5, **gekennzeichnet durch** eine Einrichtung (6) zur zeitweiligen Erzeugung eines Unterdrucks (-p) zwischen den beiden sphärischen Oberflächenabschnitten (20, 30) zum gegenseitigen Aneinanderdrücken dieser beiden Oberflächenabschnitte (20, 30).

7. Vorrichtung nach Anspruch 3, **dadurch gekennzeichnet, daß** die Einrichtung (6) zur zeitweiligen Erzeugung des Unterdrucks (-p) zwischen den beiden sphärischen Oberflächenabschnitten (20, 30) wenigstens eine in zumindest einem dieser beiden Oberflächenabschnitte(20, 30) ausgebildete Absaugöffnung (60) zum Absaugen des Gases (50) im Zwischenraum (23) zwischen den beiden sphärischen Oberflächenabschnitten (20, 30) aufweist.

8. Vorrichtung nach Anspruch 7, **dadurch gekennzeichnet, daß** die Einrichtung (6) zur Erzeugung des Unterdrucks (-p) zwischen den beiden sphärischen Oberflächenabschnitten (20, 30) eine wahlweise betätigbare Einrichtung (63) zur Erzeugung des Unterdrucks (-p) aufweist, die mit der Absaugöffnung (60) verbunden ist.

9. Vorrichtung nach einem der vorhergehenden Ansprüche, **dadurch gekennzeichnet, daß** im Halterungskörper (2) und Aufnahmekörper (3) Aussparungen (25, 45) ausgebildet sind, die zumindest zwei in zueinander schrägen Richtungen (r1, r2; r1, r3; r2, r3) auf den konvex sphärischen Oberflächenabschnitt (20) gerichtete Lichtstrahlen (7) ungehindert durch den Aufnahme- und Halterungskörper (2, 3) und aus dem Oberflächenabschnitt (21) zum Anbringen des zu halternden Teils (1) treten lassen.

10. Vorrichtung nach einem der vorangehenden Ansprüche, **gekennzeichnet durch** eine Einrichtung (80) zu einem wahlweisen Öffnen und Schließen des Befestigungswerkzeugs (8).

11. Vorrichtung nach Anspruch 10, **dadurch gekennzeichnet, daß** die Einrichtung (80) zum wahlweisen Öffnen und Schließen des Befestigungswerkzeugs (8) von außen betätigbar im Halterungskörper (2) ausgebildet ist.

12. Vorrichtung nach einem der vorhergehenden Ansprüche, **dadurch gekennzeichnet, daß** im Halterungskörper (2) ein Schlitz (200) zum Aufnehmen einer optischen Faser (12) ausgebildet ist.

13. Vorrichtung nach einem der vorhergehenden Ansprüche, **dadurch gekennzeichnet, daß** ein Radius (R2) des Oberflächenabschnitts (20) des Halterungskörpers (2) größer als ein Zentimeter ist.

14. Anwendung einer Vorrichtung nach einem der vorhergehenden Ansprüche zum parallelen Ausrichten eines ebenen Oberflächenabschnitts (11) des Teils (1) zu einem diesem Oberflächenabschnitt (11) zugekehrten ebenen Oberflächenabschnitt (101) eines anderen Teils (100), wobei das eine Teil (1) auf dem Halterungskörper (2) so befestigt wird, daß der ebene Oberflächenabschnitt (11) dieses Teils (1) vom Halterungskörper (2) und Aufnahmekörper (3) abgekehrt ist, und wobei der ebene Oberflächenabschnitt (11) des so befestigten einen Teils (1) und der ebene Oberflächenabschnitt (101) des anderen Teils (1)) durch Bewegen des Halterungskörpers (2) mit dem Aufnahmekörper (3) und des anderen Teils (10) relativ zueinander flächig in Kontakt miteinander gebracht werden.

15. Anwendung nach Anspruch 14, wobei die flächig in Kontakt miteinander gebrachten ebenen Oberflächenabschnitte (11, 101) des auf dem Halterungskörper (2) befestigten einen Teils (2) und des anderen Teils (10) durch Laserschweißen fest miteinander verbunden werden.

16. Anwendung nach Anspruch 15, wobei als das eine Teil (1) eine optische Linsen- und/oder Faserhalterung und als das andere Teil (10) ein optischer Sendemodul, an den die optische Linsen- und/oder Faserhalterung präzise anzukoppeln ist, verwendet werden.

## Claims

1. Device for mounting a part (1), comprising
- a mounting body (2) which is present for attaching and mounting the part (1) and which
- has a convexly spherical surface section (20) and a surface section (21) for attaching the part (1) to be mounted,
- a locating body (3) which is present for rotatably supporting the mounting body (2) and which
- has a concavely spherical surface section (30) forming a sliding-seat surface for the convexly spherical surface section (20) of the mounting body (2), and
- comprising a sliding agent (50) for arranging between the concavely spherical surface section (30) of the locating body (3) and the convexly spherical surface section (20), accommodated in this section (30), of the mounting body (2) in the form of a sliding layer (5),
**characterized in that**
- a fastening tool (8) for the optionally releasable fastening of the part (1) to be mounted is fastened to the mounting body (2), and
- imaging optics (91) and an optical detector (92) are arranged in the fastening tool (8) in such a way that the imaging optics (91) focus light on the detector (92), this light entering the mounting body (2) through an opening (261) formed in the surface section (21) of said mounting body (2) for attaching the part (1) to be mounted.

2. Device according to Claim 1, **characterized by** an arrangement (4) for at least temporarily producing the sliding layer (5) consisting of the sliding agent (50) between the concavely spherical surface section (30) of the locating body (3) and the accommodated convexly spherical surface section (20) of the mounting body (2).

3. Device according to Claim 2, **characterized in that** the sliding agent (50) is a gas.

4. Device according to Claim 3, **characterized in that** the arrangement (4) for producing the sliding layer (50) from the gas (50) has at least one inflow opening (40) which is formed in one of the two spherical surface sections (20, 30) and is intended for allowing the gas (50) to flow under a pressure (P) into an intermediate space (23) between the two spherical surface sections (20, 30).

5. Device according to Claim 4, **characterized in that** the arrangement (4) for producing the sliding layer (50) from the gas (50) has a means (43) which can be optionally actuated, is intended for generating the gas (50) under the pressure (P) and is connected to the inflow opening (40).

6. Device according to one of Claims 3 to 5,
**characterized by** an arrangement (6) for temporarily generating a vacuum (-p) between the two spherical surface sections (20, 30) for pressing these two surface sections (20, 30) against one another.

7. Device according to Claim 3, **characterized in that** the arrangement (6) for temporarily generating the vacuum (-p) between the two spherical surface sections (20, 30) has at least one suction opening (60) formed in at least one of the two spherical surface sections (20, 30) and intended for drawing off the gas (50) in the intermediate space (23) between the two spherical surface sections (20, 30).

8. Device according to Claim 7, **characterized in that** the arrangement (6) for generating the vacuum (-p) between the two spherical surface sections (20, 30) has means (63) which can be optionally actuated for generating the vacuum (-p) and is connected to the suction opening (60).

9. Device according to one of the preceding claims, **characterized in that** recesses (25, 45) are formed in the mounting body (2) and locating body (3), these recesses (25, 45) allowing at least two light beams (7) directed onto the convexly spherical surface section (20) in directions (r1, r2; r1, r3; r2, r3) inclined relative to one another to pass without hindrance through the locating and mounting bodies (2, 3) and issue from the surface section (21) for attaching the part (1) to be mounted.

10. Device according to one of the preceding claims, **characterized by** an arrangement (80) for optionally opening and closing the fastening tool (8).

11. Device according to Claim 10, **characterized in that** the arrangement (80) for optionally opening and closing the fastening tool (8) is formed in the mounting body (2) in such a way that it can be actuated from outside.

12. Device according to one of the preceding claims, **characterized in that** a slot (200) for accommodating an optical fibre (12) is formed in the mounting body (2).

13. Device according to one of the preceding claims, **characterized in that** a radius (R2) of the surface section (20) of the mounting body (2) is greater than one centimetre.

14. Use of a device according to one of the preceding claims for orienting a plane surface section (11) of the part (1) parallel to a plane surface section (101), facing this surface section (11), of another part (100), the one part (1) being fixed on the mounting body (2) in such a way that the plane surface section (11) of this part (1) faces away from the mounting body (2) and locating body (3), the plane surface section (11) of the one part (1) fastened in this way and the plane surface section (101) of the other part (1) being brought into full-surface contact with one another by movement of the mounting body (2) with the locating body (3) and of the other part (10) relative to one another.

15. Use according to Claim 14, the plane surface sections (11, 101), brought into full-surface contact with one another, of the one part (2), fastened to the mounting body (2), and of the other part (10) being firmly connected to one another by laser welding.

16. Use according to Claim 15, an optical lens and/or fibre mount being used as the one part (1), and an optical transmitting module, to which the optical lens and/or fibre mount is to be coupled in a precise manner, is used as the other part (10).

## Revendications

1. Dispositif pour maintenir une pièce (1 ), comportant
- un corps formant support (2), présent pour rapporter et maintenir la pièce (1 ), corps qui comprend
- un segment de surface sphérique convexe (20) et un segment de surface (21) destiné à rapporter la pièce (1) devant être maintenue,
- un corps formant réceptacle (3), présent pour permettre le logement avec possibilité de rotation du corps formant support (2), et qui comprend
- un segment de surface sphérique concave (30), formant une surface d'ajustement glissant pour le segment de surface sphérique convexe (20) du corps formant support (2), et
- un lubrifiant (50), pour mise en place entre le segment de surface sphérique concave (30) du corps formant réceptacle (3) et le segment de surface sphérique convexe (20), repris dans ce segment (30), du corps formant support (2), sous forme d'une couche de glissement (5),
**caractérisé en ce que**
- sur le corps formant support (2) est fixé un outil de fixation (8) pour la fixation, pouvant être desserrée à volonté, de la pièce (1) devant être maintenue, et
- dans l'outil de fixation (8), une optique d'imagerie (91) et un détecteur optique (92) sont disposés de telle sorte que l'optique d'imagerie (91) focalise sur le détecteur (92) de la lumière qui, en passant par une ouverture (261), aménagée dans le segment de surface (21) pour rapporter la pièce (1), devant être maintenue, du corps formant support (2), va pénétrer dans ce corps (2).

2. Dispositif selon la revendication 1, **caractérisé par** un dispositif (4) destiné à produire au moins d'une manière intermittente la couche de glissement (5), constituée du lubrifiant (50), entre le segment de surface sphérique concave (30) du corps formant réceptacle (3) et le segment de surface sphérique convexe (20), logé dans ce dernier, du corps formant support (2).

3. Dispositif selon la revendication 2, **caractérisé en ce que** le lubrifiant (50) est un gaz.

4. Dispositif selon la revendication 3, **caractérisé en ce que** le dispositif (4) destiné à produire la couche de glissement (50) à partir du gaz (50) comprend au moins un orifice d'injection (40), aménagé dans l'un des deux segments de surface sphérique (20, 30), pour permettre l'injection du gaz (50) sous une pression P dans un espace intermédiaire (23) situé entre les deux segments de surface sphérique (20, 30).

5. Dispositif selon la revendication 4, **caractérisé en ce que** le dispositif (4) destiné à produire la couche de glissement (50) à partir du gaz (50) comprend un dispositif (43), pouvant être actionné à volonté, pour produire le gaz (50) sous la pression (P), ce dernier dispositif communiquant avec l'orifice d'injection (40).

6. Dispositif selon l'une des revendications 3 à 5, **caractérisé par** un dispositif (6) destiné à produire d'une manière intermittente une dépression (-p) entre les deux segments de surface sphérique (20, 30), pour appuyer l'un contre ces deux segments de surface (20, 30).

7. Dispositif selon la revendication 3, **caractérisé en ce que** le dispositif (6) destiné à produire d'une manière intermittente la dépression (-p) entre les deux segments de surface sphérique (20, 30) comprend au moins un orifice d'aspiration (60), aménagé au moins dans l'un de ces deux segments de surface (20, 30), pour aspirer le gaz (50) dans l'espace intermédiaire (23) situé entre les deux segments de surface sphérique (20, 30).

8. Dispositif selon la revendication 7, **caractérisé en ce que** le dispositif (6) destiné à produire la dépression (-p) entre les deux segments de surface sphérique (20, 30) comprend un dispositif (63), pouvant être actionné à volonté, destiné à produire la dépression (-p), et qui communique avec l'orifice d'aspiration (60).

9. Dispositif selon l'une des revendications précédentes, **caractérisé en ce que** dans le corps formant support (2) et dans le corps formant réceptacle (3) sont aménagés des évidements (25, 45), qui permettent à au moins deux faisceaux lumineux (7), dirigés sur le segment de surface sphérique convexe (20) selon des directions (r1, r2 ; r1, r3 ; r2, r3) inclinées l'une par rapport à l'autre, de pénétrer sans empêchement dans les corps formant réceptacle et formant support (2, 3), et à partir du segment de surface (21) pour rapporter la pièce (1 ) devant être maintenue.

10. Dispositif selon l'une des revendications précédentes, **caractérisé par** un dispositif (80) destiné au choix à ouvrir et à fermer l'outil de fixation (8).

11. Dispositif selon la revendication 10, **caractérisé en ce que** le dispositif (80) permettant au choix d'ouvrir et de fermer l'outil de fixation (8) est conçu de façon à pouvoir être actionné de l'extérieur dans le corps formant support (2).

12. Dispositif selon l'une des revendications précédentes, **caractérisé en ce que** dans le corps formant support (2) est aménagée une fente (200) destinée à recevoir une fibre optique (12).

13. Dispositif selon l'une des revendications précédentes, **caractérisé en ce qu'**un rayon (R2) du segment de surface (20) du corps formant support (2) est supérieur à un centimètre.

14. Utilisation d'un dispositif selon l'une des revendications précédentes pour l'orientation parallèle d'un segment de surface plan (11) de la pièce (1) par rapport à un segment de surface plan (101), dirigé vers ce segment de surface (11), d'une autre pièce (100), l'une des pièces (1) étant fixée sur le corps formant support (2) de telle sorte que le segment de surface plan (11) de cette pièce (1) soit éloigné du corps formant support (2) et du corps formant réceptacle (3), le segment de surface plan (11) de l'une des pièces (1) ainsi fixée et le segment de surface plan (11) de l'autre pièce (1) étant mis en contact l'un avec l'autre, en pleine surface, par déplacement, l'un par rapport à l'autre, du corps formant support (2) et comportant le corps formant réceptacle (3), et de l'autre pièce (10).

15. Utilisation selon la revendication 14, pour laquelle les segments de surface plans (11, 101), mis en contact l'un avec l'autre en pleine surface, de l'une des pièces (2) fixée au corps formant support (2) et de l'autre pièce (110), sont assemblés fermement l'un à l'autre par soudage laser.

16. Utilisation selon la revendication 15, pour laquelle, en tant que l'une des pièces (1), on utilise un support de lentille optique et/ou de fibre optique et, en tant que l'autre pièce (10), on utilise un module émetteur optique, auquel il s'agit de coupler d'une manière précise le support de lentille optique et/ou de fibre optique.
